**Europäisches Patentamt**

**European Patent Office**

**Office européen des brevets**

(11) Numéro de publication : **0 346 680 B1**

(12) **FASCICULE DE BREVET EUROPEEN**

(45) Date de publication du fascicule du brevet :
30.09.92 Bulletin 92/40

(51) Int. Cl.$^5$ : **B29B 7/18**

(21) Numéro de dépôt : **89109767.7**

(22) Date de dépôt : **30.05.89**

(54) **Mélangeur interne à rotors perfectionnés.**

(30) Priorité : **16.06.88 FR 8808205**

(43) Date de publication de la demande :
**20.12.89 Bulletin 89/51**

(45) Mention de la délivrance du brevet :
**30.09.92 Bulletin 92/40**

(84) Etats contractants désignés :
**AT BE CH DE ES FR GB GR IT LI LU NL SE**

(56) Documents cités :
**DE-B- 1 035 890**
**FR-A- 531 414**
**FR-A- 2 302 828**
**GB-A- 1 578 290**
**US-A- 1 773 367**

(73) Titulaire : **COMPAGNIE GENERALE DES ETABLISSEMENTS MICHELIN-MICHELIN & CIE**
**4, rue du Terrail**
**F-63000 Clermont-Ferrand (FR)**

(72) Inventeur : **Simonet, Dominique**
**36 bis, rue du Chauffour**
**F-63830 Nohanent (FR)**
Inventeur : **Garmy, Michel**
**2, rue de l'Auzon La Roche Blanche**
**F-63670 Le Cendre (FR)**

(74) Mandataire : **Bauvir, Jacques et al**
**Michelin & Cie Service K. Brevets**
**F-63040 Clermont-Ferrand Cédex (FR)**

EP 0 346 680 B1

## Description

La présente invention se rapporte aux mélangeurs internes. Plus particulièrement elle concerne la définition du profil des ailes dont sont pourvus ces rotors.

Les mélangeurs internes sont des malaxeurs à marche discontinue convenant pour la préparation du caoutchouc et d'autres matières plastiques. Ils comportent une cuve fermée à une ou deux chambres cylindriques communiquant entre elles, chaque chambre comportant un rotor . Chaque rotor comporte une ou plusieurs ailes. On caractérise le rotor par son profil (section par un plan perpendiculaire à l'axe de rotation donnant notamment le profil des ailes) et par son diagramme qui est un développement à plat sur un plan parallèle à l'axe de rotation, donnant le positionnement des ailes à la surface du rotor, notamment la position, l'orientation par rapport aux bords, et l'étendue de la zone d'écart minimum entre la paroi de la chambre et la surface du rotor (zone appelée dans la suite "passage au fin").

Le choix et la combinaison du nombre de chambres et du type de rotor dépendent de la composition des mélanges de caoutchouc ou matières plastiques à réaliser. Les mélangeurs internes les plus répandus pour la préparation du caoutchouc non vulcanisé comportent deux chambres et deux rotors non engrenants, tournant en sens opposés à des vitesses différentes. On en voit un exemple dans le brevet US-A-4 456 381.

Le but recherché dans les mélangeurs internes est de forcer les constituants du mélange à passer d'une chambre à l'autre et, à l'intérieur d'une chambre, d'un côté à l'autre, dans le sens axial de celle-ci, et aussi à forcer le mélange à passer entre les pales des rotors et les parois de la cuve. Ceci permet de réaliser une macro dispersion des constituants et une micro dispersion des additifs. La macro dispersion est plutôt le fait du transfert de masse de matière entre les chambres de la cuve et des transferts axiaux, c'est-à-dire le long des ailes du rotor dans chacune des chambres, alors que la micro dispersion est plutôt conditionnée par le passage entre l'aile et la paroi de la chambre.

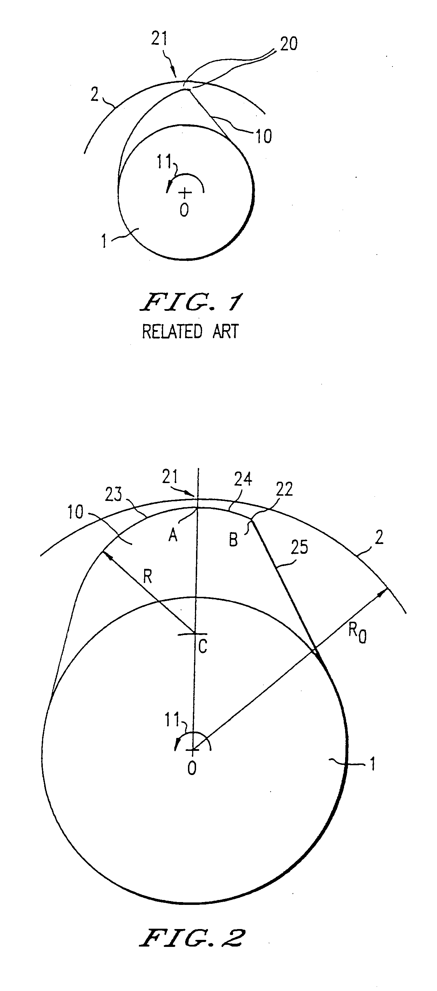

Les rotors de mélangeurs internes ont l'inconvénient de présenter, dans la partie de passage au fin, une zone de travail intense de longueur courte, qui sollicite les matériaux de manière brutale et irrégulière, pouvant provoquer des glissements importants ainsi que pour certains élastomères des décohésions accompagnées d'un mauvais état de mélangeage. La figure 1 est une vue d'un profil d'aile 10 de rotor 1 selon l'art antérieur. En particulier, on remarque la présence d'arêtes vives 20 qui délimitent de part et d'autre la zone de passage au fin 21. On définit le côté avant du passage au fin 21 en quittant celui-ci dans le sens de rotation du rotor 1 (flèche 11) qui correspond donc au convergent matérialisé par la surface de l'aile en coopération avec la paroi de la chambre 2. A l'inverse, le côté arrière que l'on appelle divergent, est situé du côté opposé par rapport au sens de rotation. On remarque également que, en arrière du passage au fin 21, on a un accroissement brutal et important de l'écart entre l'aile 10 et la paroi de la chambre 2.

D'autre part les mélangeurs internes connus ne peuvent assurer une bonne maitrise des échanges thermiques lors du cycle de mélangeage.

Le but de la présente invention est d'améliorer la micro dispersion obtenue par l'action d'un mélangeur interne, en proposant une nouvelle conception du profil d'une aile de mélangeur interne. Un autre objectif de l'invention consiste à améliorer la capacité d'une aile optimisée à évacuer les calories dégagées par l'opération de mélangeage.

Selon l'invention, le mélangeur interne comportant une cuve de mélangeage constituée par au moins une chambre cylindrique dans laquelle tourne un rotor, ledit rotor comportant au moins deux ailes inclinées, le profil de chacune desdites ailes définissant avec la paroi de la chambre un convergent puis un divergent, séparés par un passage au fin, est caractérisé en ce que le long du convergent du passage au fin, et d'un premier divergent, la courbure du profil est sensiblement constante, et en ce que, écarté du passage au fin dans le sens opposé au sens de rotation de l'aile, le profil comporte un décrochement, suivi toujours dans le sens opposé au sens de rotation, d'un second divergent plus accentué que le divergent compris entre le passage au fin et le décrochement.

Un rotor de mélangeur interne perfectionné suivant l'invention est remarquable par le fait qu'il n'existe pas d'arêtes vives dans la partie de passage au fin où se produit la sollicitation la plus intense. En effet la partie convergente a un profil convexe. Ce profil est sensiblement conservé dans le passage au fin et après celui-ci. Donc le début du divergent, juste en arrière du passage au fin, est très progressif. Il y a un relâchement lent et progressif de la sollicitation au-delà du passage au fin, contrairement à la technique antérieure où le passage au fin marque également la rupture de la continuité du profil. Les profils des ailes des rotors connus présentent donc un convergent, parfois progressif, un passage au fin, puis un divergent important. Le profil proposé par la présente invention présente successivement un convergent progressif, un passage au fin, un divergent progressif, puis une zone de rupture de la continuité du profil, appelée décrochement, suivie d'un divergent accentué.

La consultation des figures suivantes permet de bien comprendre l'invention.

La figure 2 montre le profil d'une aile selon l'invention.

La figure 3 montre un diagramme d'un rotor de mélangeur interne.

Les figures 4 et 5 illustrent le refroidissement d'une aile selon l'invention.

Pour rappel, la figure 1 illustre l'art antérieur.

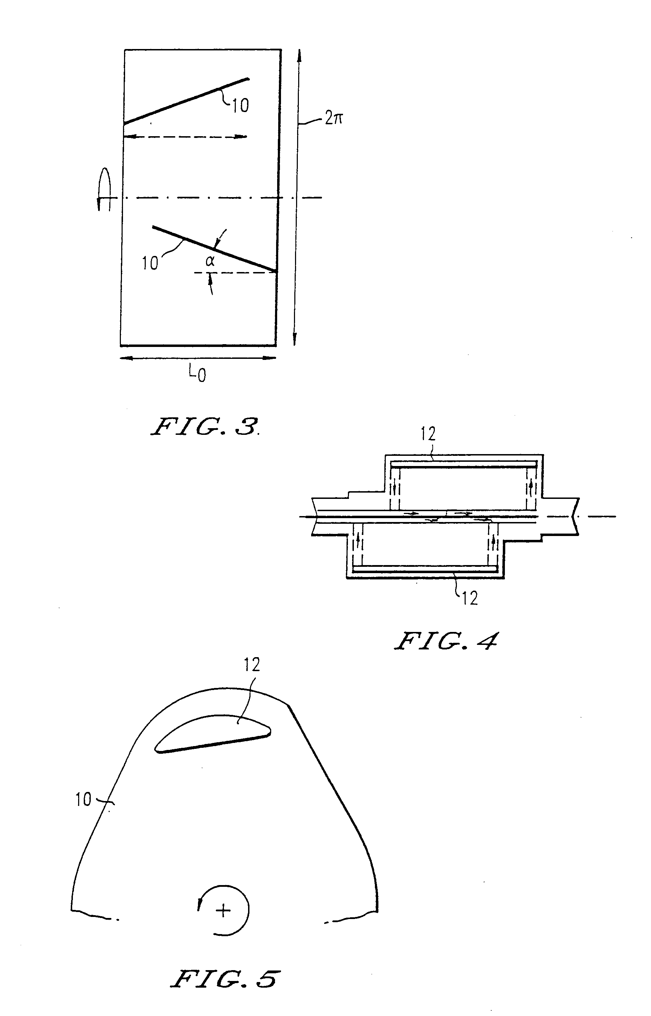

A la figure 2, on aperçoit un rotor 1, une aile 10, et la paroi de la chambre 2 dans laquelle le rotor se trouve disposé. L'aile 10 définit, avec la paroi de la chambre 2, un convergent 23 puis un passage au fin 21. Il y a une distance très nette entre le passage au fin 21 et la zone dite de décrochement 22, séparant un premier divergent 24 progressif, d'un second divergent 25 plus accentué.

Le convergent 23 du profil est défini dans un plan perpendiculaire à l'axe du rotor par un centre C et un rayon de courbure R. Le rayon de courbure est constant le long de l'aile. Le centre de courbure C est tel que sa distance à l'axe du rotor 0 est comprise entre des valeurs 0,1 $R_o$ et 0,6 $R_o$ où $R_o$ est le rayon de la cuve. Le rayon de courbure R est lui compris entre les valeurs 0,4 $R_o$ et 0,7 $R_o$. Le passage au fin 21 est défini dans un plan perpendiculaire à l'axe par le point A de distance maximale à l'axe du rotor, autrement dit d'écart minimal avec la paroi de la chambre 2. Le divergent 24 juste après le passage au fin 21 comporte un profil conçu de la même façon (rayon de courbure choisi dans le même intervalle). Le point B qui est la trace d'une arête vive, matérialise dans cet exemple le décrochement 22 et est éloigné du point A d'une distance huit fois supérieure au jeu entre le point A et la paroi de la chambre. Ces caractéristiques géométriques ont été déterminées de façon expérimentale et permettent de réaliser, en adoptant le diagramme représenté à la figure 3, d'excellentes performances de macro dispersion et de micro dispersion. Sur ce diagramme, on voit que l'on dispose deux ailes 10 s'étendant dans la direction axiale sur une longueur comprise entre 0.6 $L_o$ et 0.8 $L_o$, où $L_o$ est la longueur du rotor 1. Les ailes 10 sont inclinées en sens opposés d'un angle $\alpha$ compris entre 15° et 30°.

Un tel profil permet une sollicitation progressive du matériau entre la paroi de la chambre et le rotor à chaque passage de la matière. Il n'existe plus de sollicitations brutales. Il permet aussi un accompagnement de la matière après le passage au fin qui permet une relaxation du matériau. Un tel profil permet de plus une bonne microdispersion des charges renforçantes. Grâce à cette solution, on évite les décohésions du matériau amenées par des glissements importants à la paroi, observées dans l'art antérieur, ce qui permet d'obtenir un meilleur état final de mélangeage.

Enfin un rotor 1 de mélangeur interne perfectionné suivant l'invention comporte une chambre 12 de refroidissement localisée de préférence et principalement sous le convergent 23 dans la zone où se produisent les dégagements de chaleur les plus intenses (figure 4 et 5). La totalité du débit de réfrigérant est utilisée pour obtenir un échange thermique optimal, les chambres de refroidissement étant en série, comme cela apparaît à la figure 5. Le rotor 1 suivant l'invention offre une résistance mécanique suffisante pour l'installation de telles chambres dans les zones de travail intense du matériau.

## Revendications

1. Mélangeur interne comportant une cuve de mélangeage constituée par au moins une chambre cylindrique dans laquelle tourne un rotor (1), ledit rotor (1) comportant au moins deux ailes (10) inclinées, le profil de chacune desdites ailes définissant avec la paroi de la chambre (2) un convergent (23) puis un divergent (24), séparés par un passage au fin (21), caractérisé en ce que, le long du convergent (23) du passage au fin (21), et d'un premier divergent (24), la courbure du profil est sensiblement constante, et en ce que, écarté du passage au fin (21) dans le sens opposé au sens de rotation de l'aile, le profil comporte un décrochement (22) suivi, toujours dans le sens opposé au sens de rotation, d'un second divergent plus accentué (25) que le divergent (24) compris entre le passage au fin (21) et le décrochement (22).

2. Mélangeur interne selon la revendication 1, caractérisé en ce que la courbure sensiblement constante respecte les relations suivantes :
   O.1 $R_o$ < OC < O.6 $R_o$
   O.4 $R_o$ < R < O.7 $R_o$
   ou $R_o$ est le rayon de courbure de la chambre (2) de mélangeage
   O est le centre de la chambre (2) de mélangeage
   R est le rayon de courbure du profil
   C est le centre de courbure du profil.

3. Mélangeur interne selon l'une des revendications 1 ou 2, caractérisé en ce que la distance séparant ledit décrochement (22) du passage au fin (21) est supérieure à huit fois l'intervalle compris entre le rotor (1) et la paroi de la chambre (2) au droit du passage au fin (21).

4. Mélangeur interne selon l'une des revendications 1 à 3, caractérisé en ce que chaque rotor (1) comporte des moyens de refroidissement internes principalement disposés sous le convergent (23).

## Patentansprüche

1. Innenmischer, umfassend einen Mischbottich, bestehend aus zumindest einer zylindrischen Kammer, in der sich ein Rotor (1) dreht, der Rotor (1) weist zumindest zwei geneigte Flügel (10) auf, wobei das Profil jedes dieser Flügel mit der Wand der Kammer (2) einen konvergenten Bereich (23), sodann einen divergenten Bereich (24), getrennt durch einen Feindurchgang (21), definiert, dadurch gekennzeichnet, daß entlang des konvergenten Bereiches (23), des Feindurchganges (21) und eines ersten divergenten Bereiches (24), die Profilkrümmung im wesentlichen konstant ist und dadurch, daß im Abstand vom Feindurchgang (21) in der Richtung, die der Drehrichtung des Flügels entgegengesetzt ist, das Profil eine Ablenkung (22) aufweist, der, wiederum in der der Drehrichtung entgegengesetzten Richtung, ein zweiter divergenter Bereich (25) folgt, der ausgeprägter ist als der divergente Bereich (24), der zwischen dem Feindurchgang (21) und der Ablenkung (22) liegt.

2. Innenmischer nach Anspruch 1, dadurch gekennzeichnet, daß die im wesentlichen konstante Krümmung die folgenden Relationen erfüllt:

$$0{,}1\ R_o < OC < 0{,}6\ R_o$$
$$0{,}4\ R_o < R < 0{,}7\ R_o, \text{ wobei}$$

$R_o$ der Krümmungsradius der Mischerkammer (2) ist,
O das Zentrum der Mischkammer (2),
R der Radius der Profilkrümmung und
C das Zentrum der Profilkrümmung.

3. Innenmischer nach einem der Ansprüche 1 oder 2, dadurch gekennzeichnet, daß der Abstand, der die Ablenkung (22) vom Feindurchgang (21) trennt, größer ist als der achtfache Abstand der zwischen dem Rotor (1) und der Wand der Kammer (2) an der Stelle des Feindurchganges (21) ist.

4. Innenmischer nach einem der Ansprüche 1 bis 3, dadurch gekennzeichnet, daß jeder Rotor (1) innere Kühlmittel aufweist, die im wesentlichen im konvergenten Bereich (23) angeordnet sind.

## Claims

1. Internal mixer comprising a mixing tank including at least one cylindrical chamber within which a rotor (1) is rototably mounted, said rotor (1) comprising at least two inclined blades (10), each of said blades having a profile which defines a convergent surface (23) and a first divergent (24) surface with the wall of said chamber (2), said convergent surface and first divergent surface being connected by a surface at a fine passage (21), characterized by the fact that the center and radius of curvature of said profile are substantially constant and by the fact that said profile comprises a setback (22) which is separated from the fine passage (21) in a direction opposite to the direction of rotation of the blade and is always followed, in said direction opposite to the direction of rotation of the blade, by a second divergent surface (25) which has a steeper profile than the divergent surface (24) being between the fine passage surface (21) and the setback (22).

2. Internal mixer according to claim 1, characterized by the fact that the curvature meets the following equations :

$$0.1\ R_o < OC < 0.6\ R_o$$
$$0.4\ R_o < R < 0.7\ R_o$$

where
. $R_o$ is the radius of curvature of the mixing chamber (2),
. O is the center of the mixing of chamber (2),
. R is the radius of curvature of the profile,
. C is the center of curvature of the profile.

3. Internal mixer according to claim 1 or 2, characterized by the fact that the distance separating said setback (22) from the fine passage (21) is greater than eight times the interval between the rotor (1) and the wall of the chamber (2) at the fine passage (21).

4. Internal mixer according to one of the claims 1 to 3, characterized by the fact that it comprises inner cooling means in said rotor (1), having passages positioned substantially under said convergent surfaces (23).

*FIG. 1*

RELATED ART

*FIG. 2*

FIG. 3.

FIG. 4

FIG. 5